(19) Europäisches Patentamt
European Patent Office
Office européen des brevets

(11) **EP 3 015 325 A1**

(12) **EUROPEAN PATENT APPLICATION**

(43) Date of publication:
**04.05.2016 Bulletin 2016/18**

(51) Int Cl.:
***B60T 8/1755*** *(2006.01)*

(21) Application number: **15190683.1**

(22) Date of filing: **21.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **27.10.2014 JP 2014218642**

(71) Applicant: **Toyota Jidosha Kabushiki Kaisha Toyota-shi, Aichi-ken 471-8571 (JP)**

(72) Inventors:
• **KAWASAKI, Toshifumi**
**TOYOTA-SHI, AICHI-KEN, 471-8571 (JP)**
• **UECHI, Masaaki**
**TOYOTA-SHI, AICHI-KEN, 471-8571 (JP)**

• **TAKI, Naoki**
**TOYOTA-SHI, AICHI-KEN, 471-8571 (JP)**
• **KONDO, Kumiko**
**TOYOTA-SHI, AICHI-KEN, 471-8571 (JP)**
• **HARADA, Hiroshi**
**TOYOTA-SHI, AICHI-KEN, 471-8571 (JP)**
• **KIMURA, Akio**
**TOYOTA-SHI, AICHI-KEN, 471-8571 (JP)**
• **HAYASHI, Hideaki**
**TOYOTA-SHI, AICHI-KEN, 471-8571 (JP)**
• **SAKAGUCHI, Atsutoshi**
**TOYOTA-SHI, AICHI-KEN, 471-8571 (JP)**
• **FUTATSUGI, Tomohiko**
**TOYOTA-SHI, AICHI-KEN, 471-8571 (JP)**

(74) Representative: **Intès, Didier Gérard André et al Cabinet Beau de Loménie
158, rue de l'Université
75340 Paris Cedex 07 (FR)**

(54) **VEHICLE TRAVEL CONTROL APPARATUS**

(57) A vehicle travel control apparatus (1) is provided which includes: an automatic brake control part (101) configured to perform an automatic brake control that automatically applies a brake force to a host vehicle when there is a probability of collision with an obstacle in front of the host vehicle; and a drive force recovery control part (102) configured to increase, in response to an accelerator operation by a driver, a target drive force to a demand drive force from the driver by a predetermined increase amount per unit time after having performed the automatic brake control. The drive force recovery control part (102) determines the predetermined increase amount per unit time such that the predetermined increase amount per unit time becomes greater as the brake force applied by the automatic brake control part (101) during the automatic brake control is smaller.

FIG.1

**Description**

FIELD

The present invention is related to a vehicle travel control apparatus.

BACKGROUND

A vehicle drive support apparatus is known from Japanese Laid-open Patent Publication No. 2012-196997 (referred to as "Patent Document 1", hereinafter), for example. According to the vehicle drive support apparatus disclosed in Patent Document 1, if an operation by a driver for preventing a collision is detected in a state in which an automatic brake control is operated, the automatic brake control is canceled to return to a driving state in which the demand from the driver is given a higher priority. It is noted that, in the driving state in which the demand from the driver is given a higher priority, a throttle valve is opened according to an amount of an operation of a gas pedal.

However, according to the configuration disclosed in Patent Document 1, there is the following problem because the throttle valve is always opened according to the amount of the operation of the gas pedal, regardless of magnitude of a brake force applied during the automatic brake control. For example, if the automatic brake control is canceled when the brake force during the automatic brake control is relatively great, there is a probability that a sudden recovery of the drive force causes the driver to feel strange. In order to solve the problem, there may be such a solution in which the drive force is gradually restored to the demand drive force by the driver when the automatic brake control is canceled. However, even such a solution may causes the driver to feel strange, when the automatic brake control is canceled in a situation where the brake force during the automatic brake control is relatively small, because the recovery of the drive force toward the demand drive force by the driver is delayed.

Therefore, an object of the present invention is to provide a vehicle travel control apparatus that varies a way of recovering a drive force, according to a brake force applied during an automatic brake control, after the automatic brake control.

SUMMARY

According to one aspect of the present invention, a vehicle travel control apparatus is provided which includes:

an automatic brake control part configured to perform an automatic brake control that automatically applies a brake force to a host vehicle when there is a probability of collision with an obstacle in front of the host vehicle; and

a drive force recovery control part configured to increase, in response to an accelerator operation by a driver, a target drive force to a demand drive force from the driver by a predetermined increase amount per unit time after having performed the automatic brake control, wherein

the drive force recovery control part determines the predetermined increase amount per unit time such that the predetermined increase amount per unit time becomes greater as the brake force applied by the automatic brake control part during the automatic brake control is smaller.

BRIEF DESCRIPTION OF DRAWINGS

Fig. 1 is a diagram illustrating a configuration of an example of a vehicle drive control apparatus 1 according to the present invention.
Fig. 2 is a diagram illustrating a change in time series of a target control value of an automatic brake control.
Fig. 3 is a flowchart illustrating an example of a process executed by a drive force recovery control part 102.
Fig. 4 is a flowchart illustrating an example of a process for a drive force recovery control executed by a drive force recovery control part 102.
Fig. 5 is a diagram explaining the drive force recovery control.
Fig. 6 is a flowchart illustrating another example of a process for the drive force recovery control executed by the drive force recovery control part 102.
Fig. 7 is a flowchart illustrating another example of a process for the drive force recovery control executed by the drive force recovery control part 102.
Fig. 8 is a flowchart illustrating an example of a process for a throttle full close control executed by a throttle full close control part 103.

DESCRIPTION OF EMBODIMENTS

In the following, embodiments of the present invention are described in detail with reference to appended drawings.

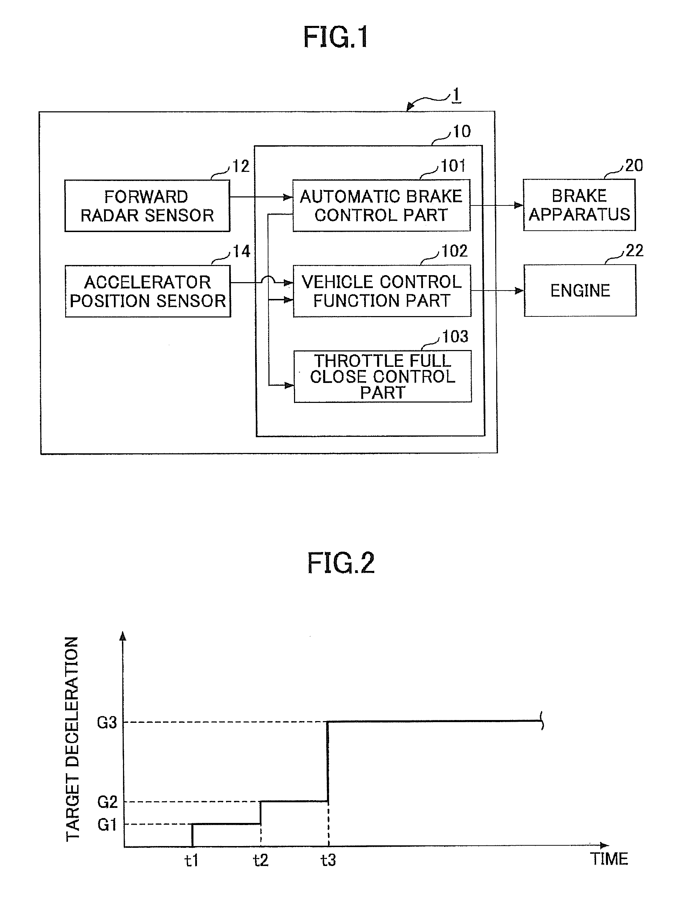

Fig. 1 is a diagram illustrating a configuration of an example of a vehicle drive control apparatus 1 according to the present invention.

The vehicle drive control apparatus 1 includes a processing device 10, a forward radar sensor 12, and an accelerator position sensor 14.

The processing device 10 is formed by a computer. The respective functions of the processing device 10 (including functions described hereinafter) may be implemented by hardware, software, firmware or a combination thereof. The processing device 10 may be implemented by a plurality of the processing devices (including processing devices in sensors).

The forward radar sensor 12 detects a state of a forward obstacle (a preceding vehicle, etc., for example) in front of a host vehicle using a radio wave (millimeter wave, for example), a light wave (laser, for example) or a ultrasonic wave as a detection wave. The forward radar sensor 12 detects information which represents a relationship between the forward obstacle and the host vehicle such as a relative speed, a relative distance and a lateral position of the forward obstacle with respect to the host vehicle, for example, at a predetermined cycle. The forward obstacle information thus detected by the forward radar sensor 12 is transmitted to the processing device 10 at a predetermined cycle, for example. It is noted that any functions of the forward radar sensor 12 (a function of calculating the position of the forward obstacle, for example) may be implemented by the processing device 10.

It is noted that an image sensor may be used in addition to or instead of the forward radar sensor 12. The image sensor includes a camera, which includes imaging elements such as CCDs (charge-coupled device), CMOSs (complementary metal oxide semiconductor), etc., and an image processor to recognize the state of the forward obstacle. The camera of the image sensor may be of a stereo type. The image sensor detects, based on an image recognition result, the information which represents the relationship between the forward obstacle and the host vehicle such as a relative speed, and position information of the forward obstacle with respect to the host vehicle, for example, at a predetermined cycle. The forward obstacle information thus detected with the image sensor may be transmitted to the processing device 10 at a predetermined cycle, for example. It is noted that the image processing function of the image processor (a function of calculating a position of the forward obstacle, for example) may be implemented by the processing device 10.

An accelerator position sensor 14 detects an operation amount of the accelerator pedal by the driver. The accelerator position information from the accelerator position sensor 14 is transmitted to the processing device 10 at a predetermined cycle.

The control device 10 includes an automatic brake control part 101 and a vehicle control function part 102, as illustrated in Fig. 1. Further, preferably, the processing device 10 includes a throttle full close control part 103, as illustrated in Fig. 1.

The automatic brake control part 101 determines, based on information from the forward radar sensor 12, whether an automatic brake control start condition is met. The automatic brake control start condition is met when there is a probability of collision with an obstacle in front of the host vehicle. The automatic brake control part 101 performs the automatic brake control for automatically applying the brake force to the host vehicle when the automatic brake control start condition is met. For example, in the case of a collision prevention control with respect to the forward obstacle, the automatic brake control part 101 calculates a TTC (Time to Collision) that corresponds to a time before the predicted collision with the forward obstacle, and determines that the automatic brake control start condition is met when the calculated TTC becomes less than a predetermined first threshold Th1 (1.5 second, for example). It is noted that the TTC may be derived by dividing the relative distance to the forward obstacle by the relative speed with respect to the forward obstacle.

The automatic brake control is a control for automatically applying the brake force to the host vehicle. For example, the automatic brake control is implemented by increasing wheel cylinder pressures by a brake apparatus 20 under a situation where the brake pedal is not operated by the driver. The target control value during the automatic brake control may be determined based on factors other than an operation amount of a brake pedal. An example of a way of determining the target control value of the automatic brake control is described hereinafter with reference to Fig. 2. It is noted that the target control value may be a brake force, a deceleration, a hydraulic pressure, a gradient of an increase of the hydraulic pressure, etc. In the following, as an example, it is assumed that the target control value is defined by the deceleration such that the target control value is a target deceleration. The target deceleration may be transmitted to the brake apparatus 20 such that the target deceleration is included in an automatic brake control demand, or the target deceleration may be transmitted to the brake apparatus 20 as an automatic brake control demand. It is noted that the brake apparatus 20 includes a pump and an accumulator to generate high pressure oil. At the time of the automatic brake control, valves such as a master cylinder cut solenoid valve, the pump, etc. are controlled to increase wheel cylinder pressures of wheel cylinders. Further, the oil hydraulic circuit of the brake apparatus 20 may be equal to a configuration that is used for a brake by wire system such as an ECB (Electric Control Braking).

The automatic brake control part 101 determines whether a cancelation condition is met during the automatic brake control. The cancelation condition is met when the accelerator position is greater than or equal to a predetermined threshold Tac1, for example. The predetermined threshold Tac1 corresponds to a lower limit value of an accelerator position range that could be implemented when the driver has an explicit acceleration intention, and may be adapted by experiments, etc. Further, the cancelation condition is met when an emergency steering operation for preventing an accident is performed by the driver, for example.

The automatic brake control part 101 determines whether an automatic brake control end condition is met during the automatic brake control. The automatic brake control end condition is provided for normally ending the automatic brake control. The automatic brake control end condition is common to the cancelation condition in that the automatic brake control is ended when the condition is met. The automatic brake control end condition may be met when the collision is detected, a vehicle body speed becomes 0 km/h, the TTC exceeds the predetermined first threshold Th1, a driver demand deceleration that exceeds the target deceleration related to the automatic brake control is generated due to the operation of the brake pedal by the driver, the automatic brake control demand continues for a predetermined time (3 seconds, for example), etc.

The drive force recovery control part 102 increases, in response to the accelerator operation by the driver, the drive force toward a demand drive force by the driver by a predetermined increase rate Vr (i.e., a predetermined increase amount per unit time) after the automatic brake control. This control is also referred to as "a drive force recovery control", hereinafter. "After the automatic brake control by the automatic brake control part 101" corresponds to "after the automatic brake control by the automatic brake control part 101 due to the cancelation condition or the automatic brake control end condition being met". The operation of the drive force recovery control part 102 is described hereinafter.

The throttle full close control part 103 keeps a target position of the throttle position at a predetermined minimum position during the automatic brake control by the automatic brake control part 101. This control is also referred to as "a throttle full close control", hereinafter. The predetermined minimum position is determined within a range of the throttle position that does not cause an engine stall. It is noted that, during the throttle full close control, the target position of the throttle position is set to the predetermined minimum position, regardless of the accelerator position.

Next, with reference to Fig. 2, an example of an operation of the automatic brake control part 101 is described.

Fig. 2 is a diagram illustrating a change in time series of the target control value of the automatic brake control.

In the example illustrated in Fig. 2, at time point t1, the automatic brake control start condition is met. The automatic brake control part 101 sets the target deceleration at a first target deceleration G1 when the automatic brake control start condition is met. The first target deceleration G1 may be less than or equal to 0.07 G, for example. The control (an example of an automatic brake control at a first stage) in which the automatic brake control part 101 sets the target deceleration at the first target deceleration G1 is also referred to as "a first preliminary automatic brake control", hereinafter. The first preliminary automatic brake control may be performed to fill (eliminate) clearance between brake pads and brake disks (and/or remove air included in a brake hydraulic circuit), for example, to increase responsiveness at a subsequent automatic brake control. It is noted that the automatic brake control part 101 does not turn on stop lamps during the first preliminary automatic brake control.

Afterward, at time point t2, the automatic brake control part 101 sets the target deceleration to a second target deceleration G2. The second target deceleration G2 may be less than or equal to 0.07 G, for example. It is noted that the second target deceleration G2 may be greater than the first target deceleration G1, as illustrated in Fig. 2, or may be the same as the first target deceleration G1. The control (another example of an automatic brake control at a first stage) in which the automatic brake control part 101 sets the target deceleration at the second target deceleration G2 is also referred to as "a second preliminary automatic brake control", hereinafter. It is noted that the automatic brake control part 101 turns on the stop lamps during the second preliminary automatic brake control. It is noted that when the second target deceleration G2 is the same as the first target deceleration G1, the difference between the first preliminary automatic brake control and the second preliminary automatic brake control is only whether the stop lamps are turned on. Mainly, the second preliminary automatic brake control is performed to call attention to the driver of a following vehicle with the stop lamps that have been turned on. It is noted that a condition to be met to start the second preliminary automatic brake control may be met after a lapse of a predetermined time from the timing of starting the first preliminary automatic brake control, for example. Alternatively, the condition to be met to start the second preliminary automatic brake control may be met when the TTC becomes smaller than a predetermined second threshold Th2 (< Th1).

Afterward, at time point t3, the automatic brake control part 101 sets the target deceleration to a third target deceleration G3. The third target deceleration G3 is substantially greater than the second target deceleration G2, and has a function of preventing the collision as much as possible. The third target deceleration G3 may be greater than or equal to 0.6 G, for example. The control (an example of an automatic brake control at a second stage) in which the automatic brake control part 101 sets the target deceleration at the third target deceleration G3 is also referred to as "a primary automatic brake control", hereinafter. The primary automatic brake control is performed to prevent the collision as much as possible. It is noted that a condition to be met to start the primary automatic brake control is met after a lapse of a predetermined time from the timing of starting the first preliminary automatic brake control, for example. Alternatively, the condition to be met to start the primary automatic brake control may be met when the TTC becomes smaller than a predetermined third threshold Th3 (< Th2). The predetermined third threshold Th3 may correspond to a maximum value of a range of the TTC that could be implemented when the collision with the forward obstacle is inevitable. Further, relative speed at which the collision can be prevented may be calculated in advance on a TTC basis, and collision inevitable determination mapped data may be generated based on the calculated relative speeds.

It is noted that the automatic brake control part 101 continues the primary automatic brake control based on the target deceleration even if a driver demand deceleration (which is determined according to an amount of an operation of a brake pedal by the driver) greater than 0 is generated during the primary automatic brake control, as long as the driver demand deceleration does not exceed the target deceleration.

It is noted that the example illustrated in Fig. 2 is exemplary, and other examples in which the target deceleration (and thus the brake force applied to the host vehicle) may be varied in time series are also possible. For example, one of the first preliminary automatic brake control and the second preliminary automatic brake control may be omitted. Further, the automatic brake control part 101 instantaneously changes the target deceleration from the second target deceleration G2 to the third target deceleration G3; however, the change may be implemented by a predetermined gradient.

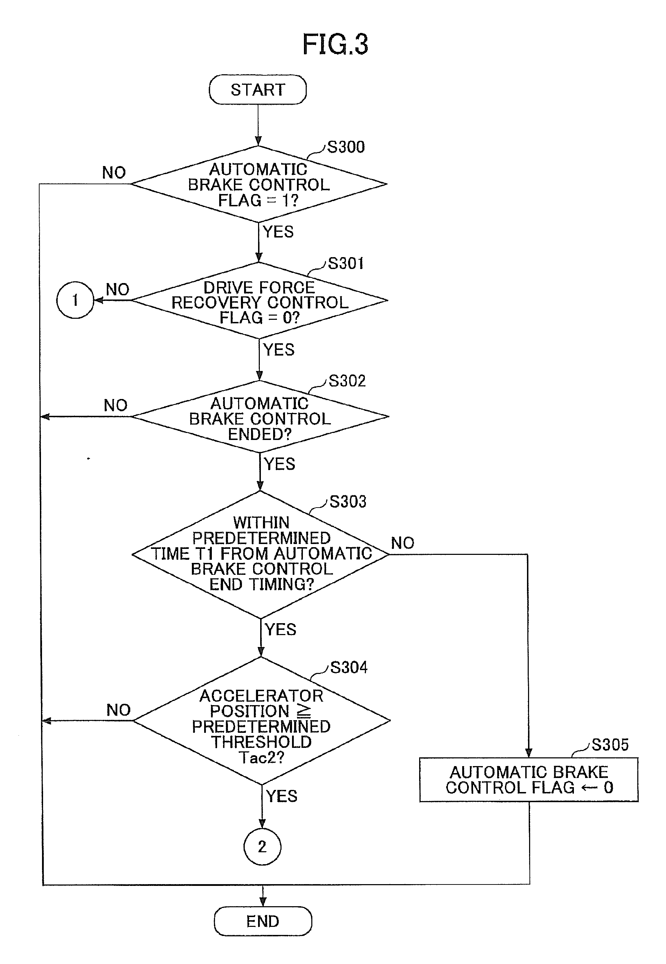

Next, with reference to Fig. 3, an example of an operation of the drive force recovery control part 102 is described.

Fig. 3 is an example of a flowchart of a process executed by the drive force recovery control part 102. The process illustrated in Fig. 3 is performed at a predetermined cycle.

In step S300, the drive force recovery control part 102 determines whether an automatic brake control flag is "1". The automatic brake control flag is set to "1" when the automatic brake control by the automatic brake control part 101 is started. If it is determined that the automatic brake control flag is "1", the process routine goes to step S301, otherwise the process routine at the current cycle directly ends.

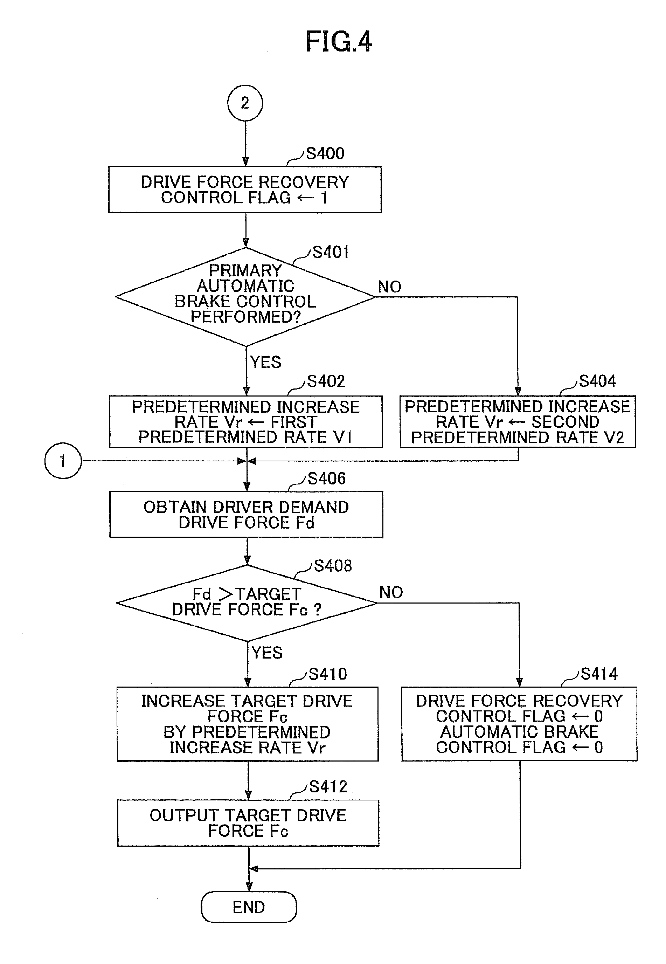

In step S301, the drive force recovery control part 102 determines whether a drive force recovery control flag is "0". The drive force recovery control flag is set to "1" during the drive force recovery control. If it is determined that the drive force recovery control flag is "0", the process routine goes to step S302, otherwise the process routine goes to step S406 in Fig. 4.

In step S302, the drive force recovery control part 102 determines whether the automatic brake control by the automatic brake control part 101 is ended. The automatic brake control by the automatic brake control part 101 ends when the cancelation condition or the automatic brake control end condition is met as described above. If it is determined that the automatic brake control by the automatic brake control part 101 is ended, the process routine goes to step S303, otherwise the process routine at the current cycle directly ends.

In step S303, the drive force recovery control part 102 determines whether the lapsed time from the timing of ending the automatic brake control is less than or equal to a predetermined time T1. The predetermined time T1 represents a state immediately after the timing of ending the automatic brake control, and is adapted by experiments. For example, the predetermined time T1 may be within a range that is greater than 0 seconds and less than or equal to 3 seconds. If it is determined that the lapsed time from the timing of ending the automatic brake control is less than or equal to the predetermined time T1, the process routine goes to step S304, otherwise (i.e., he lapsed time from the timing of ending the automatic brake control is greater than the predetermined time T1) the process routine goes to step S305.

In step S304, the drive force recovery control part 102 determines, based on information from the accelerator position sensor 14, whether the accelerator position is greater than or equal to a predetermined threshold Tac2. The predetermined threshold Tac2 is used to detect the accelerator operation of the driver, and thus the predetermined threshold Tac2 may be relatively small. Thus, the predetermined threshold Tac2 is substantially smaller than the predetermined threshold Tac1. For example, the predetermined threshold Tac2 is greater than 0 and smaller than 10%. If it is determined that the accelerator position is greater than or equal to Tac2, the process routine goes to step S400 in Fig. 4, otherwise the process routine at the current cycle directly ends.

In step S305, the drive force recovery control part 102 sets the automatic brake control flag to "0".

According to the process illustrated in Fig. 3, if the accelerator operation that involves the accelerator position greater than the predetermined threshold Tac2 is detected within the predetermined time T1 from the timing of ending the automatic brake control by the automatic brake control part 101, the drive force recovery control part 102 goes to step S400 in Fig. 4 to start the drive force recovery control in response to the accelerator operation. It is noted that when the automatic brake control by the automatic brake control part 101 is canceled due to the accelerator operation that involves the accelerator position greater than the predetermined threshold Tac2, the drive force recovery control part 102 starts the drive force recovery control in response to the accelerator operation.

Fig. 4 is a flowchart illustrating an example of a process for the drive force recovery control executed by the drive force recovery control part 102.

In step S400, the drive force recovery control part 102 sets the drive force recovery control flag to "1".

In step S401, the drive force recovery control part 102 determines whether the primary automatic brake control is performed during the automatic brake control by the automatic brake control part 101. For example, whether the primary automatic brake control is performed during the automatic brake control by the automatic brake control part 101 can be determined based on the information (a state of a flag, for example) from the automatic brake control part 101. If it is determined that the primary automatic brake control is performed during the automatic brake control by the automatic brake control part 101, the process routine goes to step S402, otherwise (i.e. if the first or second preliminary automatic brake control is performed without the primary automatic brake control being performed) the process routine goes to step S404.

In step S402, the drive force recovery control part 102 sets the predetermined increase rate Vr to a first predetermined increase rate V1.

In step S404, the drive force recovery control part 102 sets the predetermined increase rate Vr to a second predetermined increase rate V2. The second predetermined increase rate V2 is greater than the first predetermined increase rate V1.

In step S406, the drive force recovery control part 102 obtains the current driver demand drive force Fd. The driver demand drive force Fd is determined according to the accelerator position. For example, the drive force recovery control part 102 obtains the driver demand drive force from another controller that calculates the driver demand drive force Fd. Alternatively, the drive force recovery control part 102 may calculate the driver demand drive force Fd based on the accelerator position information from the accelerator position sensor 14.

In step S408, the drive force recovery control part 102 determines whether the driver demand drive force Fd obtained in step S406 is greater than the target drive force (the current value) Fc. If it is determined that the driver demand drive force Fd is greater than the target drive force Fc, the process goes to step S410, and otherwise the process goes to step S414.

In step S410, the drive force recovery control part 102 increases, based on the predetermined increase rate Vr (VI or V2) set in step S402 or step S404, the target drive force Fc toward the driver demand drive force Fd obtained in step S406 by the predetermined increase rate Vr. Specifically, the target drive force Fc is updated with the following formula.

$$Fc\ (k)\ =\ Fc\ (k-1)\ +\ Vr\ \times\ \Delta T$$

Here, Fc (k-1) represents the current value of the target drive force Fc, and Fc (k) represents the updated value of the target drive force Fc. $\Delta T$ corresponds to a cycle at which the target drive force Fc is updated.

In step S412, the drive force recovery control part 102 outputs the target drive force Fc calculated (updated) in step S410. Thus, an engine 22 is controlled such that the target drive force Fc is implemented.

In step S414, the drive force recovery control part 102 sets the drive force recovery control flag and the automatic brake control flag to "0" to end the drive force recovery control.

According to the process illustrated in Fig. 4, if the primary automatic brake control is performed during the automatic brake control by the automatic brake control part 101, the target drive force Fc is restored to the driver demand drive force Fd by the first predetermined increase rate V1. When the primary automatic brake control is performed during the automatic brake control by the automatic brake control part 101, relatively great deceleration is generated. Thus, instantaneous recovery of the target drive force Fc to the driver demand drive force Fd may cause the driver to feel strange. For example, the driver is astonished with the relatively great deceleration due to the automatic brake control and erroneously presses down the accelerator position. In such a case, instantaneous recovery of the drive force may cause the driver to feel strange. According to the process illustrated in Fig. 4, the first predetermined increase rate V1 is set such that the first predetermined increase rate V1 is smaller than the second predetermined increase rate V2. Thus, according to the process illustrated in Fig. 4, such a problem due to the sudden recovery of the drive force can be reduced.

On the other hand, according to the process illustrated in Fig. 4, if the primary automatic brake control is not performed during the automatic brake control by the automatic brake control part 101 (i.e., if the first or second preliminary automatic brake control is performed), the target drive force Fc is restored to the driver demand drive force Fd by the second predetermined increase rate V2 (> V1). If the primary automatic brake control is not performed during the automatic brake control by the automatic brake control part 101, relatively great deceleration is not generated. Thus, there is a high probability that the driver does not recognize the execution of the automatic brake control. In such a case, if the target drive force Fc is restored to the driver demand drive force Fd by a slow rate, the slow recovery of the drive force to the driver demand drive force may cause the driver to feel strange. Further, in such a case, there is not high probability that the driver is astonished with the automatic brake control and erroneously presses down the accelerator position, because the driver may not recognize the execution of the automatic brake control. According to the process illustrated in Fig. 4, the second predetermined increase rate V2 is set such that the second predetermined increase rate V2 is greater than the first predetermined increase rate V1. Thus, according to the process illustrated in Fig. 4, such a problem due to the slow recovery of the drive force to the driver demand drive force can be reduced.

In this way, according to the process illustrated in Fig. 4, the drive force recovery control part 102 varies the way of restoring the drive force after the automatic brake control according to the brake force (the magnitude of the target deceleration) that was applied during the automatic brake control. Specifically, the drive force recovery control part 102 sets the predetermined increase rate Vr such that the predetermined increase rate Vr becomes greater as the brake force applied during the automatic brake control is smaller. Therefore, it becomes possible to restore the target drive force Fc to the driver demand drive force Fd by an appropriate increase rate according to the brake force applied by the automatic brake control part 101 during the automatic brake control.

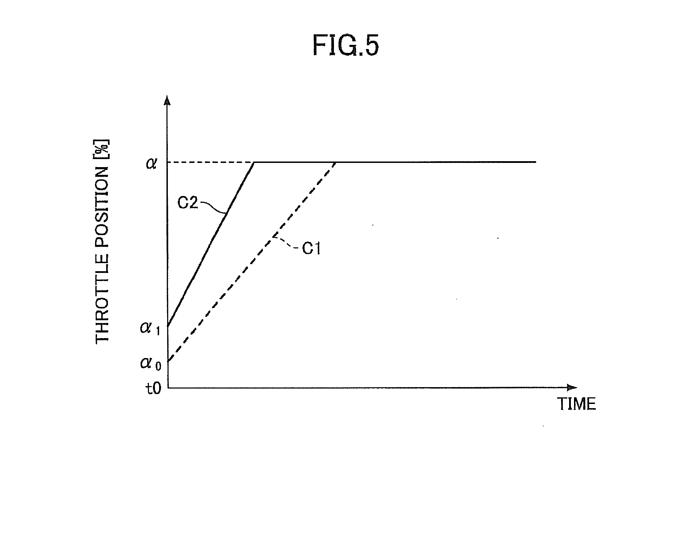

Fig. 5 is a drawing explaining the process illustrated in Fig. 4. In Fig. 5, a lateral axis indicates time, and a vertical axis indicate a throttle position (target value). In Fig. 5, C1 indicates the throttle position in time series in the case where the first predetermined increase rate V1 is set, and C2 indicates the throttle position in time series in the case where the second predetermined increase rate V2 is set.

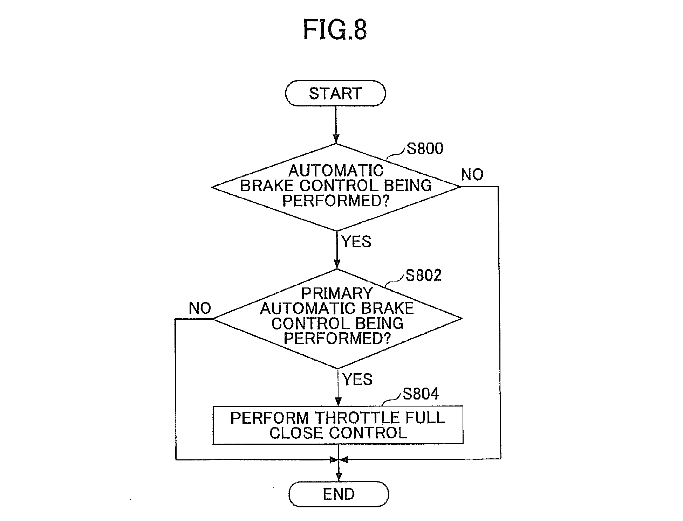

In the example illustrated in Fig. 5, it is assumed that the drive force recovery control by the drive force recovery control part 102 is started at time point t0, and the driver demand drive force is constant. $\alpha$ indicates the throttle position corresponding to the driver demand drive force. $\alpha 0$ and $\alpha 1$ indicate the throttle positions during the automatic brake control. It is noted that, in the example illustrated in Fig. 5, $\alpha 0$ corresponds to the throttle position (i.e., the predetermined minimum position) implemented by the throttle full close control, assuming that the process illustrated in Fig. 8 is performed. $\alpha 1$ corresponds to the throttle position in the case where the throttle full close control is not performed.

As illustrated in Fig. 5, when the first predetermined increase rate V1 is set, the throttle position (target value) is increased to the value $\alpha$ corresponding to the driver demand drive force from the time point t0 by a relatively low rate (gradient). On the other hand, when the second predetermined increase rate V2 is set, the throttle position (target value) is increased to the value $\alpha$ corresponding to the driver demand drive force from the time point t0 by a relatively high rate.

It is noted that, in the example illustrated in Fig. 5, even when the second predetermined increase rate V2 is set, the throttle position (target value) is gradually increased to the value $\alpha$ corresponding to the driver demand drive force from the time point t0; however, the throttle position (target value) may be immediately set to the value $\alpha$ at the time point t0. In other words, the second predetermined increase rate V2 may be set to infinity, and the throttle position (target value) may be instantaneously set to the value $\alpha$ at the time point t0.

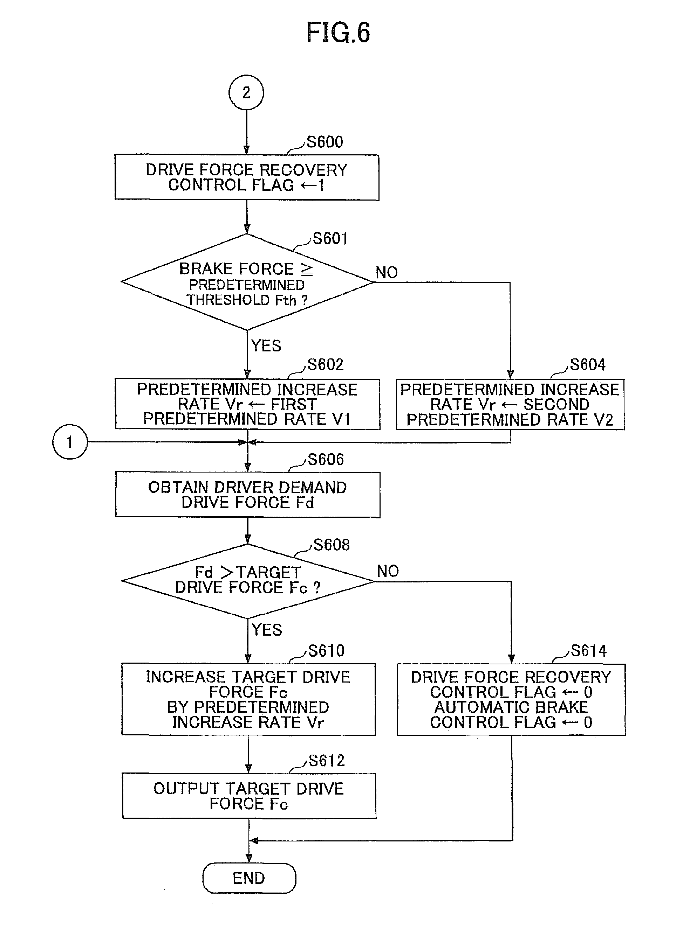

Fig. 6 is a flowchart illustrating another example of a process for the drive force recovery control executed by the drive force recovery control part 102. The process illustrated in Fig. 6 is performed instead of the process illustrated in Fig. 4.

The processes in step S600, and step S602 through step S614 may be the same as those in step S400, and step S402 through step S414 illustrated in Fig. 4, respectively.

In step S601, the drive force recovery control part 102 determines whether the brake force applied by the automatic brake control part 101 during the automatic brake control is greater than or equal to a predetermined threshold Fth. The predetermined threshold Fth is greater than the brake force applied according to the second target deceleration G2. The drive force recovery control part 102 can determine, based on the magnitude of the target deceleration set (determined) by the automatic brake control part 101 during the automatic brake control, the brake force applied by the automatic brake control part 101 during the automatic brake control. The drive force recovery control part 102 can obtain, from the automatic brake control part 101, the magnitude of the target deceleration set (determined) by the automatic brake control part 101 during the automatic brake control. It is noted that if the predetermined threshold Fth is the same as the brake force applied according to the third target deceleration G3, the process illustrated in Fig. 6 is equivalent to the process illustrated in Fig. 4.

According to the process illustrated in Fig. 6, the same effects as the process illustrated in Fig. 4 can be obtained. Specifically, the drive force recovery control part 102 sets the predetermined increase rate Vr such that the predetermined increase rate Vr becomes greater as the brake force, which has been applied during the automatic brake control, is smaller. Therefore, it becomes possible to restore the target drive force Fc to the driver demand drive force Fd by an appropriate increase rate according to the brake force applied by the automatic brake control part 101 during the automatic brake control.

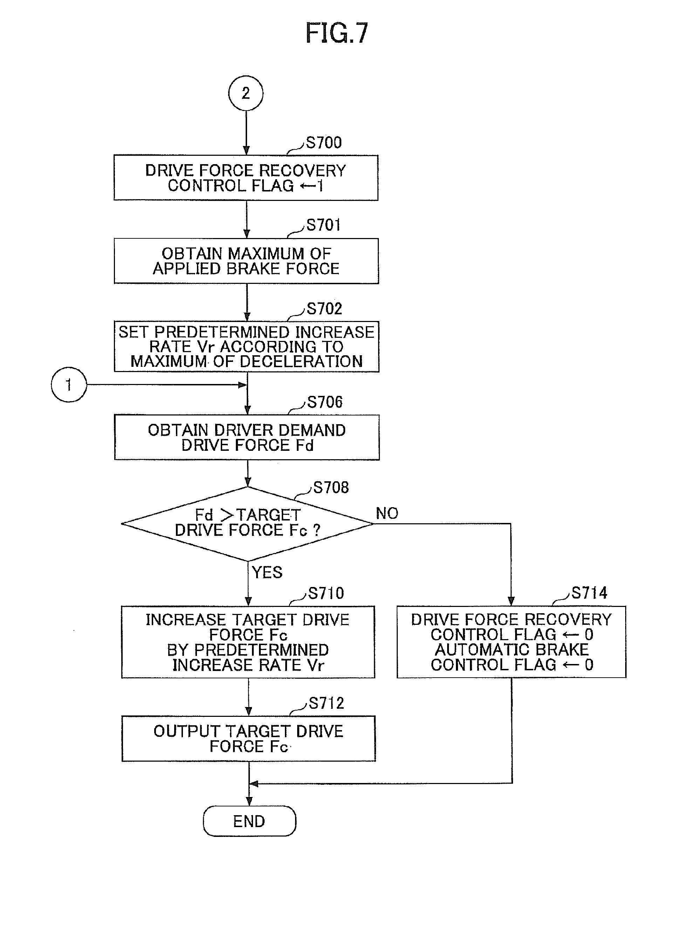

Fig. 7 is a flowchart illustrating another example of a process for the drive force recovery control executed by the drive force recovery control part 102. The process illustrated in Fig. 7 is performed instead of the process illustrated in Fig. 4.

The processes in step S700, and step S706 through step S714 may be the same as those in step S400, and step S406 through step S414 illustrated in Fig. 4, respectively.

In step S701, the drive force recovery control part 102 obtains the maximum value of the brake force applied by the automatic brake control part 101 during the automatic brake control. The drive force recovery control part 102 can determine, based on a maximum value of the magnitude of the target deceleration set (determined) by the automatic brake control part 101 during the automatic brake control, the maximum value of the brake force applied by the automatic brake control part 101 during the automatic brake control. The drive force recovery control part 102 can obtain, from the automatic brake control part 101, the maximum value of the magnitude of the target deceleration set (determined) by the automatic brake control part 101 during the automatic brake control.

In step S702, the drive force recovery control part 102 sets the predetermined increase rate Vr based on the maximum value of the brake force applied by the automatic brake control part 101 such that the predetermined increase rate Vr becomes smaller as the maximum value becomes greater. A relationship between the maximum value and the predetermined increase rate Vr may be linear or non-linear. The predetermined increase rate Vr thus set may be used in step S710 as described above.

According to the process illustrated in Fig. 7, the same effects as the process illustrated in Fig. 4 can be obtained. Specifically, the drive force recovery control part 102 sets the predetermined increase rate Vr such that the predetermined increase rate Vr becomes greater as the brake force applied during the automatic brake control is smaller. Therefore, it becomes possible to restore the target drive force Fc to the driver demand drive force Fd by an appropriate increase rate according to the brake force applied by the automatic brake control part 101 during the automatic brake control.

Next, with reference to Fig. 8, the throttle full close control by the throttle full close control part 103 is described.

Fig. 8 is a flowchart illustrating an example of a process for the throttle full close control executed by the throttle full close control part 103. The process illustrated in Fig. 8 is performed at a predetermined cycle.

In step S800, the throttle full close control part 103 determines whether the automatic brake control by the automatic brake control part 101 is being performed. For example, whether the automatic brake control by the automatic brake control part 101 is being performed can be determined based on the information (a state of a flag, for example) from the automatic brake control part 101. If it is determined that the automatic brake control by the automatic brake control part 101 is being performed, the process routine goes to step S802, otherwise the process routine at the current cycle directly ends.

In step S802, the throttle full close control part 103 determines whether the primary automatic brake control is being performed. For example, whether the primary automatic brake control is being performed can be determined based on the information (a state of a flag, for example) from the automatic brake control part 101. If it is determined that the primary automatic brake control is being performed, the process routine goes to step S804, otherwise the process routine at the current cycle directly ends.

In step S804, the throttle full close control part 103 performs the throttle full close control. In this way, the throttle full close control part 103 continuously performs the throttle full close control until the automatic brake control by the automatic brake control part 101 ends.

According to the process illustrated in Fig. 8, the throttle full close control part 103 performs the throttle full close control only during the primary automatic brake control. In other words, the throttle full close control part 103 does not perform the throttle full close control during the first or second preliminary automatic brake control. Thus, the deceleration can be increased by minimizing the engine output during the primary automatic brake control.

It is noted that, in the case where the process illustrated in Fig. 4 and the process illustrated in Fig. 8 are used, the throttle full close control is related to the predetermined increase rate Vr in the drive force recovery control. For example, if the throttle full close control is performed during the automatic brake control by the automatic brake control part 101, the predetermined increase rate Vr in the drive force recovery control is set to the first predetermined increase rate V1. On the other hand, if the throttle full close control is not performed during the automatic brake control by the automatic brake control part 101, the predetermined increase rate Vr in the drive force recovery control is set to the second predetermined increase rate V2. Thus, as an equivalent example, in the process illustrated in Fig. 4, in step S401, the drive force recovery control part 102 may determine whether the throttle full close control is performed during the automatic brake control by the automatic brake control part 101.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention. Further, all or part of the components of the embodiments described above can be combined.

For example, according to the embodiments, the throttle full close control part 103 is provided; however, the throttle full close control part 103 may be omitted. Specifically, the throttle full close control is not necessarily performed.

Further, according to the embodiments, the engine is used as a driver source of the vehicle; however, the present invention can be applied a vehicle (i.e., a hybrid vehicle or an electric vehicle) that uses an electric motor as a driver source other than the engine. It is noted that, in the case of the hybrid vehicle or the electric vehicle, a control for generating a predetermined regenerative torque with the electric motor may be performed instead of the throttle full close control.

The present application is based on Japanese Priority Application No. 2014-218642, filed on October 27, 2014, the entire contents of which are hereby incorporated by reference.

**Claims**

1. A vehicle travel control apparatus (1), comprising:

   an automatic brake control part (101) configured to perform an automatic brake control that automatically applies a brake force to a host vehicle when there is a probability of collision with an obstacle in front of the host vehicle; and
   a drive force recovery control part (102) configured to increase, in response to an accelerator operation by a driver, a target drive force to a demand drive force from the driver by a predetermined increase amount per unit time after the automatic brake control, wherein
   the drive force recovery control part (102) is configured to determine the predetermined increase amount per unit time such that the predetermined increase amount per unit time becomes greater as the brake force applied by the automatic brake control part (101) during the automatic brake control is smaller.

2. The vehicle travel control apparatus (1) of claim 1, wherein the automatic brake control includes an automatic brake control at a first stage, and an automatic brake control at a second stage to be performed after the automatic brake control at the first stage,
   the brake force applied by the automatic brake control at the second stage is greater than that applied by the automatic brake control at the first stage,
   the drive force recovery control part (102) is configured to decrease the predetermined increase amount per unit time, in the case where the automatic brake control at the second stage is performed during the automatic brake control, with respect to a case where the automatic brake control at the second stage is not performed during the automatic brake control.

3. The vehicle travel control apparatus (1) of claim 2, wherein the demand drive force is implemented by an engine,
   the vehicle travel control apparatus (1) further comprising a throttle full close control part (103) configured to keep a target position of a throttle position at a predetermined minimum position during the automatic brake control at the second stage.

# FIG.1

# FIG.2

# FIG.3

START

S300

AUTOMATIC
BRAKE CONTROL
FLAG = 1?

NO

YES

S301

DRIVE FORCE
RECOVERY CONTROL
FLAG = 0?

NO → ①

YES

S302

AUTOMATIC
BRAKE CONTROL
ENDED?

NO

YES

S303

WITHIN
PREDETERMINED
TIME T1 FROM AUTOMATIC
BRAKE CONTROL
END TIMING?

NO

YES

S304

ACCELERATOR
POSITION ≧
PREDETERMINED
THRESHOLD
Tac2?

NO

YES

S305

AUTOMATIC BRAKE
CONTROL FLAG ← 0

②

END

# FIG.4

②

S400
DRIVE FORCE RECOVERY
CONTROL FLAG ← 1

S401
PRIMARY
AUTOMATIC
BRAKE CONTROL
PERFORMED? — NO

YES

S402
PREDETERMINED INCREASE
RATE Vr ← FIRST
PREDETERMINED RATE V1

S404
PREDETERMINED INCREASE
RATE Vr ← SECOND
PREDETERMINED RATE V2

①

S406
OBTAIN DRIVER DEMAND
DRIVE FORCE Fd

S408
Fd > TARGET
DRIVE FORCE Fc ? — NO

YES

S410
INCREASE TARGET DRIVE
FORCE Fc
BY PREDETERMINED
INCREASE RATE Vr

S414
DRIVE FORCE RECOVERY
CONTROL FLAG ← 0
AUTOMATIC BRAKE
CONTROL FLAG ← 0

S412
OUTPUT TARGET DRIVE
FORCE Fc

END

# FIG.5

# FIG.6

```
              ( 2 )
                │
                ▼                    S600
   ┌─────────────────────────────┐
   │   DRIVE FORCE RECOVERY       │
   │   CONTROL FLAG ←1            │
   └─────────────────────────────┘
                │
                ▼                    S601
              ╱────────────╲
            ╱  BRAKE FORCE ≧ ╲      NO
          ╱   PREDETERMINED    ╲──────────────┐
          ╲   THRESHOLD Fth ?   ╱              │
            ╲                 ╱                │
              ╲────────────╱                  │
                │ YES                          │
                ▼           S602               ▼            S604
   ┌─────────────────────────────┐  ┌─────────────────────────────┐
   │  PREDETERMINED INCREASE      │  │  PREDETERMINED INCREASE      │
   │  RATE Vr ← FIRST             │  │  RATE Vr ← SECOND            │
   │  PREDETERMINED RATE V1       │  │  PREDETERMINED RATE V2       │
   └─────────────────────────────┘  └─────────────────────────────┘
 ( 1 )──────────────▶│◀───────────────────────┘
                     ▼            S606
   ┌─────────────────────────────┐
   │   OBTAIN DRIVER DEMAND       │
   │   DRIVE FORCE Fd             │
   └─────────────────────────────┘
                │
                ▼                    S608
              ╱────────────╲
            ╱   Fd >TARGET    ╲     NO
          ╱   DRIVE FORCE Fc ?  ╲──────────────┐
          ╲                     ╱              │
            ╲────────────────╱                 │
                │ YES                          │
                ▼           S610               ▼            S614
   ┌─────────────────────────────┐  ┌─────────────────────────────┐
   │  INCREASE TARGET DRIVE       │  │  DRIVE FORCE RECOVERY        │
   │  FORCE Fc                    │  │  CONTROL FLAG ← 0            │
   │  BY PREDETERMINED            │  │  AUTOMATIC BRAKE             │
   │  INCREASE RATE Vr            │  │  CONTROL FLAG ← 0            │
   └─────────────────────────────┘  └─────────────────────────────┘
                │                                │
                ▼           S612                 │
   ┌─────────────────────────────┐               │
   │   OUTPUT TARGET DRIVE        │               │
   │   FORCE Fc                   │               │
   └─────────────────────────────┘               │
                │◀──────────────────────────────┘
                ▼
            (  END  )
```

# FIG.7

**②**

**S700**
DRIVE FORCE RECOVERY
CONTROL FLAG ← 1

**S701**
OBTAIN MAXIMUM OF
APPLIED BRAKE FORCE

**S702**
SET PREDETERMINED INCREASE
RATE Vr ACCORDING TO
MAXIMUM OF DECELERATION

**①**

**S706**
OBTAIN DRIVER DEMAND
DRIVE FORCE Fd

**S708**
Fd > TARGET
DRIVE FORCE Fc ?  — NO

YES

**S710**
INCREASE TARGET DRIVE
FORCE Fc
BY PREDETERMINED
INCREASE RATE Vr

**S714**
DRIVE FORCE RECOVERY
CONTROL FLAG ← 0
AUTOMATIC BRAKE
CONTROL FLAG ← 0

**S712**
OUTPUT TARGET DRIVE
FORCE Fc

END

15

# FIG.8

```
                    ┌─────────────┐
                    │    START    │
                    └─────────────┘
                           │
                           ▼            S800
                    ╱─────────────╲
                   ╱   AUTOMATIC    ╲    NO
                  ╱ BRAKE CONTROL BEING╲──────┐
                   ╲   PERFORMED?    ╱         │
                    ╲───────────────╱          │
                           │                   │
                          YES                  │
                           │            S802   │
              ╱─────────────────────╲          │
       NO    ╱      PRIMARY          ╲         │
      ┌──────  AUTOMATIC BRAKE        ╲        │
      │       ╲  CONTROL BEING        ╱        │
      │        ╲   PERFORMED?        ╱         │
      │         ╲─────────────────╱            │
      │                 │                      │
      │                YES    S804             │
      │                 ▼                      │
      │      ┌─────────────────────┐           │
      │      │ PERFORM THROTTLE FULL│          │
      │      │    CLOSE CONTROL     │          │
      │      └─────────────────────┘           │
      │                 │                      │
      └─────────────────┼──────────────────────┘
                        ▼
                 ┌─────────────┐
                 │     END     │
                 └─────────────┘
```

Europäisches
Patentamt

European
Patent Office

Office européen
des brevets

# EUROPEAN SEARCH REPORT

Application Number

EP 15 19 0683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 060 464 A2 (HITACHI LTD [JP]) 20 May 2009 (2009-05-20) | 1,2 | INV. B60T8/1755 |
| A | * paragraph [0195] - paragraph [0266]; figures 18-24 * | 3 | |
| Y | US 2008/125944 A1 (KAMISHIMA HIROFUMI [JP] ET AL) 29 May 2008 (2008-05-29) | 1,2 | |
| A | * paragraph [0062] - paragraph [0075]; figures 4, 5 * | 3 | |
| A | US 2004/098197 A1 (MATSUMOTO SHINJI [JP] ET AL) 20 May 2004 (2004-05-20) * the whole document * | 1 | |
| A | US 2012/191313 A1 (MIYAHARA TAKAYUKI [JP]) 26 July 2012 (2012-07-26) * the whole document * | 1 | |
| A | EP 2 620 344 A1 (HONDA MOTOR CO LTD [JP]) 31 July 2013 (2013-07-31) * the whole document * | 1 | |

TECHNICAL FIELDS
SEARCHED (IPC)

B60T

The present search report has been drawn up for all claims

| Place of search | Date of completion of the search | Examiner |
|---|---|---|
| Munich | 22 February 2016 | Graniou, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 19 0683

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2016

| Patent document cited in search report | | Publication date | Patent family member(s) | | Publication date |
|---|---|---|---|---|---|
| EP 2060464 | A2 | 20-05-2009 | EP 2060464 A2 | | 20-05-2009 |
| | | | JP 2009120116 A | | 04-06-2009 |
| | | | US 2009143951 A1 | | 04-06-2009 |
| US 2008125944 | A1 | 29-05-2008 | CN 101187422 A | | 28-05-2008 |
| | | | JP 2008126933 A | | 05-06-2008 |
| | | | US 2008125944 A1 | | 29-05-2008 |
| US 2004098197 | A1 | 20-05-2004 | DE 10354018 A1 | | 17-06-2004 |
| | | | JP 4005483 B2 | | 07-11-2007 |
| | | | JP 2004168192 A | | 17-06-2004 |
| | | | US 2004098197 A1 | | 20-05-2004 |
| US 2012191313 | A1 | 26-07-2012 | CN 102602291 A | | 25-07-2012 |
| | | | JP 5206804 B2 | | 12-06-2013 |
| | | | JP 2012153164 A | | 16-08-2012 |
| | | | US 2012191313 A1 | | 26-07-2012 |
| EP 2620344 | A1 | 31-07-2013 | CN 103209876 A | | 17-07-2013 |
| | | | EP 2620344 A1 | | 31-07-2013 |
| | | | JP 5689471 B2 | | 25-03-2015 |
| | | | US 2013173113 A1 | | 04-07-2013 |
| | | | WO 2012039212 A1 | | 29-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012196997 A
- JP 2014218642 A